# EUROPÄISCHE PATENTSCHRIFT

(11) **EP 1 206 685 B1**
(45) Veröffentlichungstag und Bekanntmachung des Hinweises auf die Patenterteilung: **28.05.2003**
(21) Anmeldenummer: 00953051.0
(22) Anmeldetag: 15.07.2000
(51) Int. Cl.: G01D 5/347, G02B 5/00

(54) **REFLEXIONS-MASSVERKÖRPERUNG UND VERFAHREN ZUR HERSTELLUNG EINER RELEXIONS-MASSVERKÖRPERUNG**
REFLECTION MATERIAL MEASURE AND METHOD FOR PRODUCING A REFLECTION MATERIAL MEASURE
MESURE MATERIALISEE A REFLEXION ET PROCEDE DE PRODUCTION D'UNE MESURE MATERIALISEE A REFLEXION

(30) Priorität: 05.08.1999 DE 19937023
(43) Veröffentlichungstag der Anmeldung: 22.05.2002
(73) Patentinhaber: Dr. Johannes Heidenhain GmbH, 83292 Traunreut (DE)
(72) Erfinder: WEIDMANN, Josef, D-83224 Grassau (DE); SPECKBACHER, Peter, D-84558 Kirchweidach (DE)
(86) Internationale Anmeldenummer: EP0006772
(87) Internationale Veröffentlichungsnummer: WO01011320

(56) Entgegenhaltungen:
- EP-A- 0 511 597
- EP-A- 0 849 567
- DE-A- 4 320 728
- GB-A- 2 072 850
- US-A- 4 644 156
- ZUBEL I: "Silicon anisotropic etching in alkaline solutions. II. On the influence of anisotropy on the smoothness of etched surfaces" SENSORS AND ACTUATORS A,CH,ELSEVIER SEQUOIA S.A., LAUSANNE, Bd. 70, Nr. 3, 30. Oktober 1998 (1998-10-30), Seiten 260-268, XP004140059 ISSN: 0924-4247 in der Anmeldung erwähnt
- ZUBEL I ET AL: "Silicon anisotropic etching in alkaline solutions. I. The geometric description of figures developed under etching Si(100) in various solutions" SENSORS AND ACTUATORS A,CH,ELSEVIER SEQUOIA S.A., LAUSANNE, Bd. 70, Nr. 3, 30. Oktober 1998 (1998-10-30), Seiten 250-259, XP004140058 ISSN: 0924-4247
- PETERSEN K E: "SILICON AS A MECHANICAL MATERIAL" PROCEEDINGS OF THE IEEE,US,IEEE. NEW YORK, Bd. 70, Nr. 5, 1. Mai 1982 (1982-05-01), Seiten 420-457, XP000565139 ISSN: 0018-9219

## Beschreibung

Die vorliegende Erfindung betrifft eine Reflexions-Maßverkörperung sowie ein Verfahren zur Herstellung einer Reflexions-Maßverkörperung.

Optische Auflicht-Positionsmeßeinrichtungen umfassen üblicherweise eine Reflexions-Maßverkörperung sowie eine relativ hierzu bewegliche Abtasteinheit. Auf Seiten der Abtasteinheit ist in der Regel eine Lichtquelle angeordnet, die ein Lichtbündel in Richtung der Reflexions-Maßverkörperung emittiert. Von dort erfolgt eine Rückreflexion in Richtung der Abtasteinheit, wo das verschiebungsabhängig modulierte Lichtbündel ggf. durch ein oder mehrere Abtastteilungsstrukturen tritt und schließlich von einer optoelektronischen Detektoranordnung erfaßt wird. Die derart erzeugten, verschiebungsabhängig modulierten Signale werden dann über eine nachgeordnete Auswerteeinheit weiterverarbeitet.

Bekannte Reflexions-Maßverkörperungen derartiger Systeme bestehen in der Regel aus einem Substratmaterial, auf dem alternierend Teilbereiche mit unterschiedlichen optischen Eigenschaften angeordnet sind. Die Anordnung der verschiedenen Teilbereiche erstreckt sich hierbei im Fall einer Inkrementalteilung in der Meßrichtung. Beispielsweise kann auf einem Glas-Substrat vorgesehen werden, Teilbereiche mit hoher und geringer Reflektivität auszubilden. Alternativ wird als Substratmaterial auch Stahl verwendet, auf dem dann ebenfalls Teilbereiche mit hoher und geringer Reflektivität ausgebildet werden. Die Teilbereiche hoher Reflektivität können hierbei aus Gold bestehen, während in den geringer reflektierenden Teilbereichen die Stahloberfläche mattgeätzt wird, so daß das dort auftreffende Licht absorbiert oder diffus reflektiert wird.

An derartige Maßverkörperungen werden eine Reihe von Anforderungen gestellt. In diesem Zusammenhang sind eine möglichst hohe Abriebfestigkeit, eine hohe thermische Beständigkeit, ein definiertes thermisches Verhalten sowie eine gute Langzeitstabilität aufzuführen. Die oben erwähnten, bekannten Maßverkörperungen auf Glas- und Stahlsubstraten gewährleisten dies jedoch nur teilweise.

Aus der DE 43 20 728 A1 ist eine Reflexions-Maßverkörperung aus einkristallinem Silizium bekannt. Diese umfasst periodisch in Messrichtung angeordnete, erste und zweite Teilbereiche mit unterschiedlichen Reflexionseigenschaften. Nicht optimal für eine möglichst hohe Signalmodulation im resultierenden Abtastsignal ist jedoch der Unterschied in den optischen Eigenschaften der jeweiligen Teilbereiche.

Die GB 2 072 850 A offenbart schließlich ein Herstellungsverfahren für eine herkömmliche Maßverkörperung auf einem Metall-Substrat, bei dem geringer reflektierende Teilbereiche durch einen Ätzprozess ausgebildet werden. Die oben diskutierten Probleme bzgl. Langzeitstabilität etc. lassen sich derart jedoch ebenfalls nicht zufriedenstellend lösen.

Aufgabe der vorliegenden Erfindung ist es daher, eine Reflexions-Maßverkörperung sowie ein Verfahren zur Herstellung derselben anzugeben, um den oben aufgeführten Anforderungen möglichst weitgehend zu entsprechen.

Diese Aufgabe wird gelöst durch eine Reflexions-Maßverkörperung mit den kennzeichnenden Merkmalen des Anspruches 1.

Vorteilhafte Ausführungsformen der erfindungsgemäßen Reflexions-Maßverkörperung ergeben sich aus den Maßnahmen, die in den von Anspruch 1 abhängigen Patentansprüchen aufgeführt sind.

Zur Lösung der vorliegenden Aufgabe dient ferner ein Verfahren zur Herstellung einer Reflexions-Maßverkörperung mit den kennzeichnenden Merkmalen des Anspruches 11.

Vorteilhafte Ausführungsformen des erfindungsgemäßen Verfahrens sind in den von Anspruch 10 abhängigen Patentansprüchen aufgeführt.

Erfindungsgemäß wird nunmehr vorgesehen, ein Silizium-Substrat einzusetzen und darauf die Teilbereiche unterschiedlicher Reflektivität geeignet auszubilden. Vorzugsweise wird einkristallines Silizium verwendet. Die Teillbereiche geringer Reflektivität umfassen hierbei jeweils mehrere schräge Flächen, die durch Tiefätzen des Silizium-Substrates entlang unterschiedlicher Kristallrichtungen erzeugt werden und welche derart angeordnet sind, daß keine Retroreflexion von darauf einfallenden Lichtstrahlen resultiert.

In einer bevorzugten Ausführungsform der vorliegenden Erfindung bestehen die schrägen Flächen aus V-Rillen, die sich senkrecht oder parallel zu derjenigen Richtung erstrecken, in der die Teilbereiche mit verschiedenen Reflexionseigenschaften angeordnet sind. Als Teilbereiche mit hoher Reflektivität können die nicht weiter behandelten Teilbereiche der Silizium-Substrat-Oberfläche dienen; ggf. ist auch eine Beschichtung dieser Teilbereiche mit geeignetem Material möglich.

Alternativ können die schrägen Flächen in den geringer reflektierenden Teilbereichen auch als tiefgeätzte Pyramidenstruktur ausgebildet werden, d.h. es existieren demzufolge verschiedene Möglichkeiten die erforderlichen schrägen Flächen mit den entsprechenden optischen Wirkungen auszubilden. Diese Variante eignet sich insbesondere für Maßverkörperungen mit gröberen Teilungsperioden.

Eine derartige Maßverkörperung weist eine Reihe von Vorteilen auf. So ist in diesem Zusammenhang zunächst die hohe Abriebfestigkeit sowie die sehr hohe mechanische Beständigkeit der Maßverkörperungs-Oberfläche aufzuführen. Das vorzugsweise einkristalline Silizium-Substrat ist desweiteren strukturell stabil und verändert sich nicht mehr, d.h. es resultieren keine unerwünschten Diffusionsprozesse. Ferner besitzt Silizium ein definiertes thermisches Ausdehnungsverhalten, was insbesondere für Hochpräzisionsanwendungen von Bedeutung ist. Besonders vorteilhaft ist etwa der Einsatz der erfindungsgemäßen Maßverkörperung in der Halbleiterindustrie, da dann das jeweilige Positionsmeßsystem eine Maßverkörperung umfaßt, die den gleichen thermischen Ausdehnungskoeffizienten aufweist wie das zu prozessierende Halbleitermaterial. Ferner ist aufzuführen, daß Silizium als Substratmaterial relativ günstig in definiertem Zustand verfügbar ist, d.h. in einer stabilen Qualität bzgl. Verunreinigungen und Oberflächengüte. Desweiteren sei in diesem Zusammenhang die relativ problemlose Prozessierbarkeit dieses Materiales aufgeführt.

Selbstverständlich kann die erfindungsgemäße Reflexions-Maßverkörperung in den verschiedensten Positionsmeßeinrichtungen bzw. in Verbindung mit verschiedensten Abtastprinzipien eingesetzt werden. Desweiteren ist es natürlich möglich, die erfindungsgemäße Reflexions-Maßverkörperung in linearen Meßanordnungen ebenso einzusetzen wie in rotatorischen Meßanordnungen oder zweidimensionalen Meßanordnungen etc.. Es lassen sich erfindungsgemäß die verschiedensten Maßverkörperungen herstellen, wie etwa Inkrementalteilungen, Codeteilungen, Strukturen für Referenzmarken usw..

Weitere Vorteile sowie Einzelheiten der vorliegenden Erfindung ergeben sich aus der nachfolgenden Beschreibung von Ausführungsbeispielen anhand der beiliegenden Zeichnungen.

Dabei zeigt
- Figur 1: eine Draufsicht auf ein Ausführungsbeispiel der erfindungsgemäßen Reflexions-Maßverkörperung;
- Figur 2: einen vergrößerten Ausschnitt aus Figur 1;
- Figur 3a und 3b: jeweils Schnittansichten der Figur 2;
- Figur 4: eine Schnittansicht einer einzelnen V-Rille, in die ein Lichtstrahl einfällt;
- Figur 5a - 5h: jeweils einzelne Verfahrensschritte bei der Herstellung der erfindungsgemäßen Reflexions-Maßverkörperung;
- Figur 6: eine Rasterelektronenmikroskopie-Aufnahme eines Teiles der erfindungsgemäßen Reflexions-Maßverkörperung gemäß dem oben erläuterten ersten Ausführungsbeispiel;
- Figur 7: eine Rasterelektronenmikroskopie-Aufnahme eines Teiles eines zweiten Ausführungsbeispieles der erfindungsgemäßen Reflexions-Maßverkörperung.

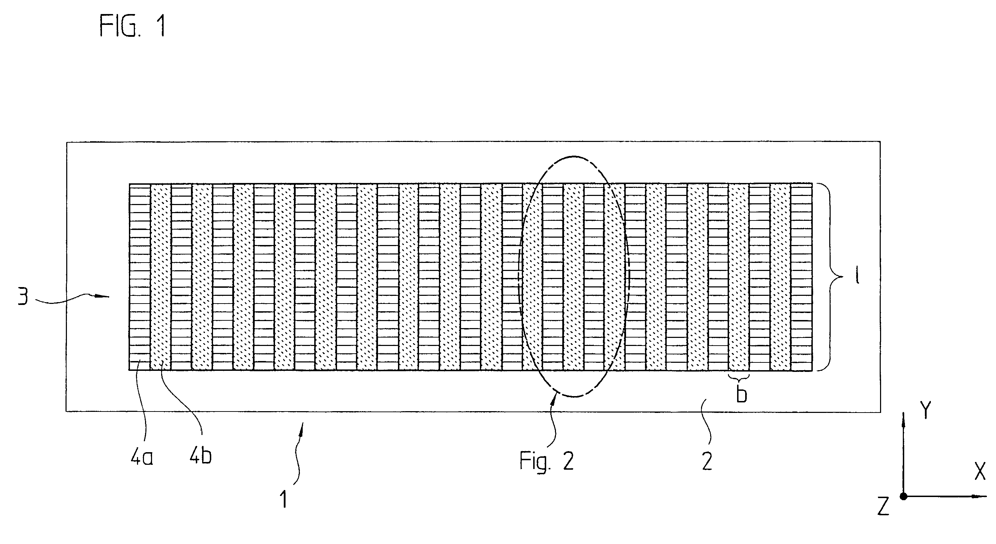

In Figur 1 ist eine Draufsicht auf ein erstes Ausführungsbeispiel der erfindungsgemäßen Reflexions-Maßverkörperung gezeigt, die z.B. in einer Positionsmeßeinrichtung eingesetzt werden kann, die zur Erfassung von Linearverschiebungen zweier zueinander beweglicher Objekte dient.

Die dargestellte Reflexions-Maßverkörperung 1 besteht im wesentlichen aus einem länglichen Silizium-Substrat 2, das sich in Meßrichtung x erstreckt, auf dem in diesem Ausführungsbeispiel eine Inkrementalteilungsspur 3 angeordnet ist. Die Inkrementalteilungsspur 3 wiederum besteht aus ersten und zweiten rechteckförmigen Teilbereichen 4a, 4b, die unterschiedliche optische Reflexionseigenschaften für darauf einfallendes Licht aufweisen. Mit dem Bezugszeichen 4a seien hierbei die Teilbereiche geringer Reflektivität bezeichen; mit dem Bezugszeichen 4b hingegen die Teilbereiche hoher Reflektivität. Die Teilbereiche 4b, 4a mit hoher und niedriger Reflektivität sind alternierend in einer ersten Richtung x angeordnet, die auch der Meßrichtung entspricht, entlang der in einer zugehörigen Positionsmeßeinrichtung eine Relatiwerschiebung gemessen würde. Die verschiedenen Teilbereiche 4a, 4b sind von ihren jeweiligen geometrischen Dimensionen her identisch ausgebildet. In der ersten Richtung x weisen sie eine Breite b auf; senkrecht hierzu, in der zweiten Richtung y, erstrecken sie sich über die Länge I, die in diesem Beispiel auch der Breite der Inkrementalteilungsspur 3 entspricht.

Die für einfallende Lichtbündel reflektierend ausgelegten Teilbereiche 4b werden in dieser Ausführungsform durch die Oberfläche des Silizium-Substrates 2 gebildet, wobei einkristallines Silizium-Substratmaterial mit der Kristallorientierung 100 gewählt wurde. Bei einer Wellenlänge λ = 860nm weist dieses Material einen Reflexionsgrad von ca. 32% auf, was für eine Reflexions-Maßverkörperung eine ausreichende Qualität der erzeugten Abtastsignale gewährleistet.

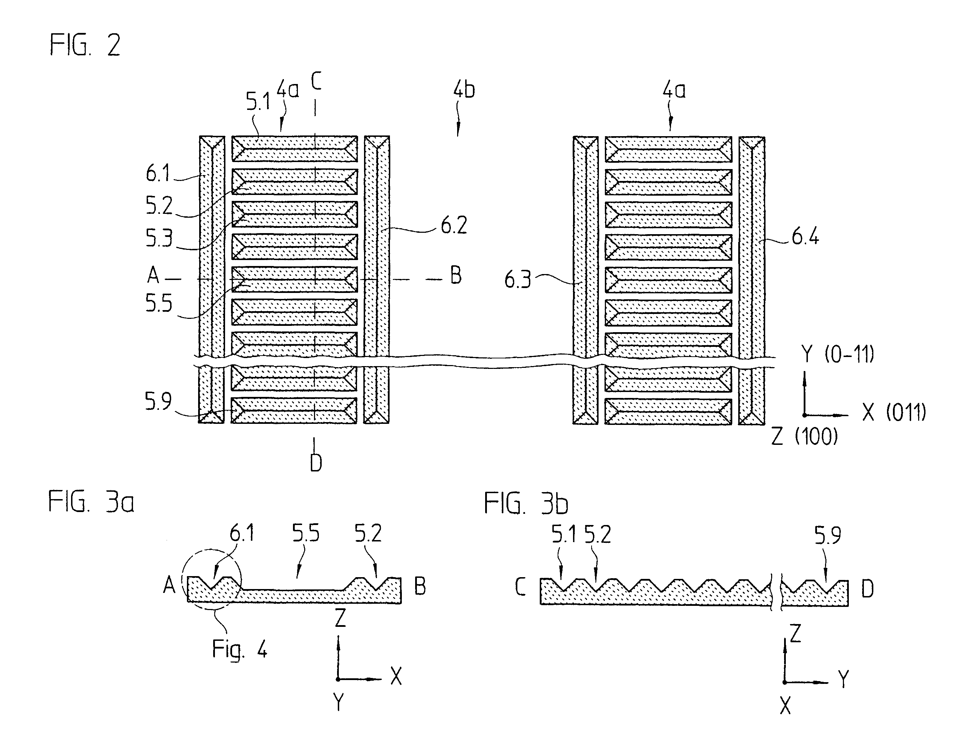

Zur erfindungsgemäßen Ausgestaltung der Teilbereiche 4a mit geringer Reflektivität sei auf die detaillierte Beschreibung der nachfolgenden Figuren 2 - 4 verwiesen. Figur 2 zeigt hierbei den in Figur 1 markierten Ausschnitt der Reflexions-Maßverkörperung 1 in vergrößerter Darstellung. Die beiden Figuren 3a und 3b stellen Schnittansichten des Ausschnittes in Figur 2 durch die angegebenen Schnittlinien AB bzw. CD dar.

Erfindungsgemäß ist in der ersten Ausführungsform nunmehr vorgesehen, die Teilbereiche 4a mit geringer Reflektivität jeweils mit mehreren als V-Rillen 5.1 - 5.10, 6.1 - 6.4 ausgebildeten schrägen Flächen zu versehen, die senkrecht oder parallel zur ersten Richtung x in einer zweiten Richtung angeordnet sind. Die zweite Richtung entspricht im dargestellten Ausführungsbeispiel der y-Richtung. In Figur 3b ist eine Längs-Schnitt durch einen Teilbereich 4a entlang der Schnittlinie CD dargestellt, anhand der die Anordnung der Vielzahl von V-Rillen 5.1 - 5.10 deutlich ersichtlich ist.

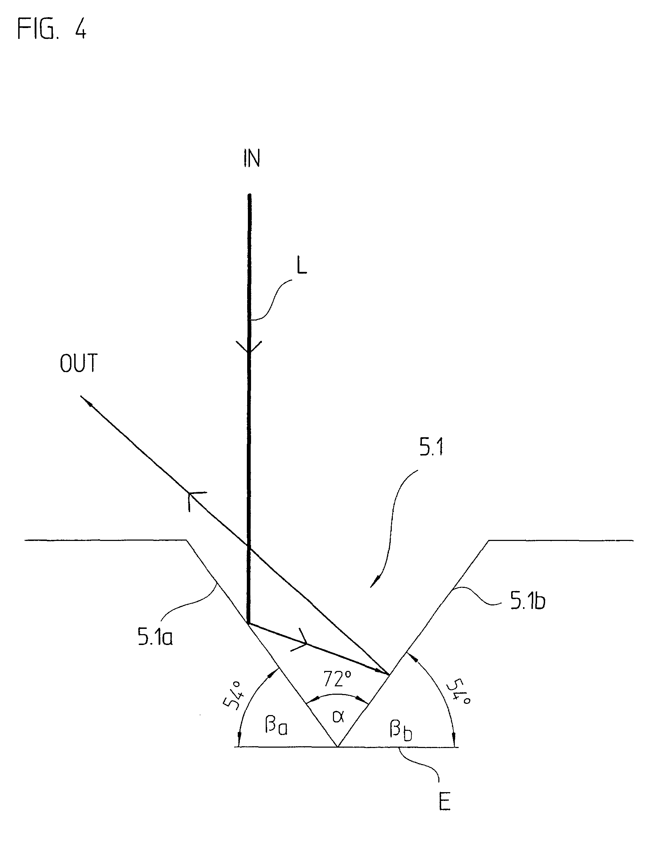

Wie in Figur 2 ebenfalls angedeutet ist, fällt die (011) - Richtung des Silizium-Substrates 2 mit der x-Richtung zusammen; die (0-11) - Richtung des Silizium-Substrates 2 fällt mit der y-Richtung zusammen, während die z-Richtung der (100) - Richtung entspricht.
Eine Detailansicht der einzelnen V-Rille 5.1 aus Figur 3a zeigt die Figur 4 in nochmals vergrößerter Darstellung; insbesondere sei hierbei die optische Wirkung derartiger schräger Flächen bzw. V-Rillen auf einen einfallenden Lichtstrahl erläutert.
Wie in Figur 4 erkennbar, nehmen die beiden Seitenflächen 5.1a, 5.1b bzw. die beiden schägen Flächen 5.1a, 5.1b einen Winkel α ≈ 72° zueinander ein; die Winkel βₐ, β_{b} der beiden Seitenflächen 5.1a, 5.1b gegenüber der Ebene E betragen dementsprechend βₐ = β_{b} ≈ 54°. Bei einer derartigen geometrischen Dimensionierung der V-Rille 5.1 wird ein aus der Einfallsrichtung IN kommender Lichtstrahl L in der dargestellten Art und Weise zweimal an den Seitenflächen 5.1a, 5.1b reflektiert und verläßt schließlich die V-Rille 5.1 in der Ausfallsrichtung OUT, die nicht mit der Einfallsrichtung IN zusammenfällt. Aus der Einfallsrichtung IN erscheint bei einer derartigen Mehrfachreflexion die V-Rille 5.1 bzw. der Teilbereich 4a mit einer Vielzahl derartiger V-Rillen 5.1 - 5.10 bzw. 6.1 - 6.4 als geringer reflektierend im Vergleich zu den daneben liegenden Teilbereichen 4b mit planen Oberflächen, da keine Retroreflexion der darauf einfallenden Lichtstrahlen resultiert.

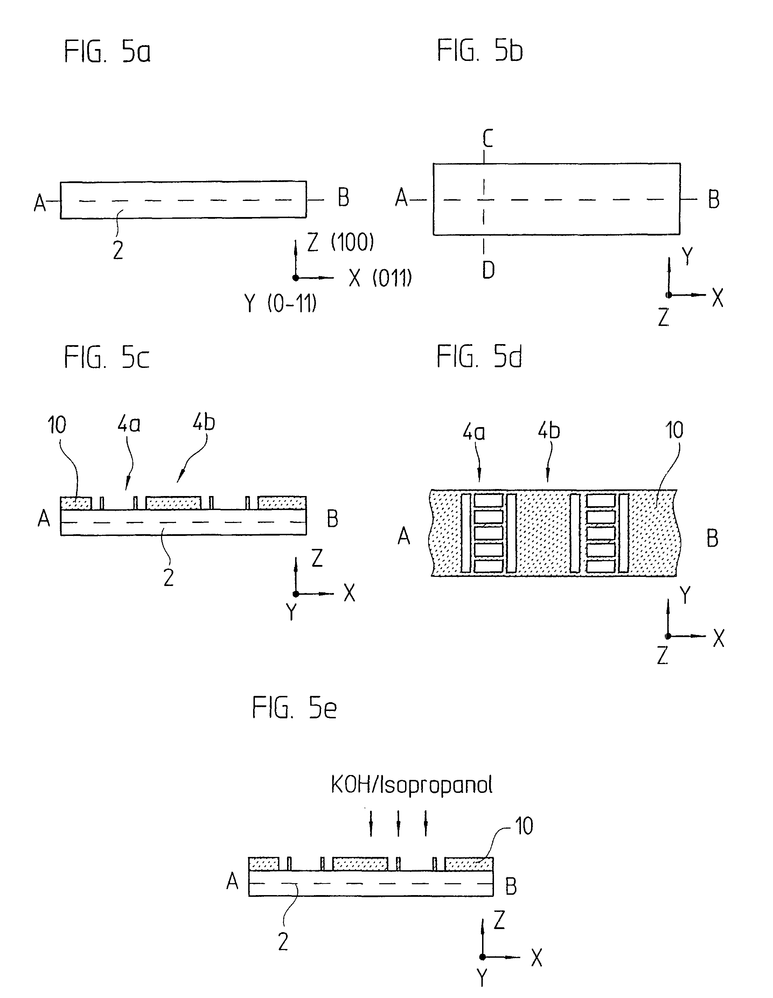

Die erfindungsgemäß angeordneten schrägen Flächen bzw. V-Rillen in den geringer reflektierenden Teilbereichen 4a lassen sich aufgrund der vorhandenen Orientierungen bestimmter Kristall-Ebenen des Silizium-Substrates 2 besonders vorteilhaft fertigen. Details in Bezug auf das erfindungsgemäße Verfahren seien im Verlauf der nachfolgenden Beschreibung anhand der Figuren 5a - 5h erläutert.

Im dargestellten Ausführungsbeispiel der erfindungsgemäßen Reflexions-Maßverkörperung 1 in den Figuren 2, 3a, 3b sind nicht nur V-Rillen 5.1 - 5.10 in den geringer reflektierenden Teilbereichen 4a vorgesehen, die sich benachbart in der zweiten Richtung y erstrecken, welche senkrecht zur ersten Richtung x orientiert ist. Vielmehr ist benachbart an den Längs-Rändern der Teilbereiche 4a jeweils mindestens eine weitere V-Rille 6.1 - 6.4 vorgesehen, die sich nahezu über die gesamte Länge I der Teilbereiche 4a in y-Richtung erstreckt. Insbesondere sei in diesem Zusammenhang auf die Schnittdarstellung in Fig. 3a hingewiesen, aus der die Anordnung dieser zusätzlichen V-Rillen 6.1 - 6.4 an den Rändern der gering reflektierenden Teilbereiche 4a noch deutlicher ersichtlich wird.
Vorteilhaft an den zusätzlichen, seitlichen V-Rillen 6.1 - 6.4 ist nunmehr, daß dadurch eine scharfe Begrenzung der unterschiedlichen Teilbereiche 4a, 4b gegeneinander gewährleistet ist. Zwingend erforderlich für die Funktion der erfindungsgemäßen Reflexions-Maßverkörperung 1 sind diese zusätzlichen V-Rillen 6.1 - 6.4 jedoch nicht.

Während im obigen Ausführungsbeispiel die schrägen Flächen in den geringer reflektierenden Teilbereichen als V-Rillen ausgebildet wurden, ist es alternativ auch möglich, die schrägen Flächen als Vielzahl von Pyramiden bzw. pyramidenförmigen Vertiefungen in diesen Teilbereichen auszubilden. Diese können regelmäßig angeordnet oder aber statistisch verteilt vorliegen. Die Erzeugung dieser Pyramidenstruktur kann ebenso wie die Erzeugung der oben diskutierten V-Rillen durch Tiefätzen des Silizium-Substrates erfolgen, wozu dann entsprechend modifizierte Ätzmasken erforderlich sind. Bezüglich weiterer Details zu einer derartigen Ausführungsform der erfindungsgemäßen Maßverkörperung sei an dieser Stelle z.B. ergänzend auf die Veröffentlichung von I. Zubel, Silicon Anisotropic Etching in Alkaline Solutions II, Sensors and Actuators, A 70 (1998), S. 260 - 268 verwiesen.

Ein Ausführungsbeispiel des erfindungsgemäßen Verfahrens zur Herstellung einer Reflexions-Maßverkörperung sei nachfolgend anhand der Figuren 5a - 5h erläutert. Hierbei wird ein Verfahren beschrieben, welches zur Herstellung einer Reflexions-Maßverkörperung gemäß dem oben beschriebenen Ausführungsbeispiel geeignet ist und bei dem die schrägen Flächen demzufolge als V-Rillen ausgebildet werden. Eine derartige Ausführung der erfindungsgemäßen gestattet insbesondere die Realisierung sehr feiner Teilungsperioden.

In Bezug auf geeignete Verfahren zur Herstellung der erwähnten Struktur mit tiefgeätzten pyramidenförmigen Vertiefungen, die sich wiederum besonders für gröbere Teilungsperioden eignet, sei lediglich auf die oben erwähnte Veröffentlichung verwiesen.
Ausgangspunkt des nachfolgend beschriebenen Verfahrens ist das in den Figuren 5a und 5b dargestellte Silizium-Substrat 2, bei dem die (011) -Richtung mit der x-Richtung und die (0-11) - Richtung mit der y-Richtung zusammenfällt. Aufgrund dieser Orientierung des Silizium-Substrates 2 ist gewährleistet, daß sich die gewünschten geraden Kanten ergeben.

In einem ersten Verfahrensschritt wird das Silizium-Substrat 2 mit einer Ätzmaske 10 versehen, die in diesem Beispiel aus einer Chrom-Beschichtung besteht. Das Silizium-Substrat 2 mit aufgebrachter Ätzmaske 10 zeigen die beiden Ansichten der Figuren 5c und 5d. Die nahezu leiterförmig ausgebildete Ätzmaske 10 wird hierbei zum einen in den Teilbereichen 4b mit gewünschter hoher Reflektivität aufgebracht; zum anderen wird die Ätzmaske 10 auch in den Bereichen der geringer reflektierenden Teilbereiche 4a aufgebracht, die sich zwischen den zu erzeugenden V-Rillen befinden sowie in seitlich begrenzenden Bereichen. In diesem Zusammenhang sei insbesondere auf die Figur 5d verwiesen, die die von der Ätzmaske 10 bedeckten Bereiche des Substrat-Materiales 2 zeigt. Unbedeckt von der Ätzmaske 10 bleiben auf dem Silizium-Substrat 2 demnach lediglich diejenigen Bereiche, in denen die V-Rillen ausgebildet werden sollen. Das räumlich selektive Aufbringen der Ätzmaske 10 auf die gewünschten Bereiche des Silizium-Substrates 2 erfolgt hierbei über bekannte lithographische Verfahren.

Alternativ zur Verwendung einer Chrom-Ätzmaske ist es möglich, in diesem Verfahrensschritt selbstverständlich auch andere Materialien für Ätzmasken einzusetzen. Beispielsweise können zu diesem Zweck auch Materialien wie TiO₂, SiO₂, geeignete Kristallite, Styroporkügelchen etc. verwendet werden, um das Silizium-Substrat 2 geeignet zu maskieren.

Im nachfolgenden Verfahrensschritt - dargestellt in Figur 5e - werden die V-Rillen in das Silizium-Substrat 2 geätzt, wozu beispielsweise das Silizium-Substrat 2 mit der Ätzmaske 10 in eine geeignete Ätzlösung aus Kaliumhydroxyd (KOH) und Isopropanol (H₇C₃OH) getaucht wird. Selbstverständlich können auch andere Ätzmedien für den erforderlichen anisotropen Ätzprozess eingesetzt werden; beispielsweise könnten an dieser Stelle auch bekannte Verfahren wie reaktives lonenätzen etc. eingesetzt werden usw.. Die gewünschten V-Rillen ergeben sich beim anisotropen Tiefätz-Prozeß aufgrund der unterschiedlichen Ätzraten im Silizium-Substrat 2 für die verschiedenen Kristallebenen-Orientierungen. So ist die Ätzrate in (100)-Richtung ca. 100 mal höher als die Ätzrate in (111)-Richtung. Der Ätzprozeß wird hierbei solange fortgesetzt, bis die dabei entstehenden schrägen Kanten bzw. Seitenflächen zusammengelaufen sind, d.h. die z.B. in Figur 4 beschriebene V-Rille vollständig ausgebildet ist. Die sich dabei letztlich ergebenden V-Rillen-Strukturen sind in der Schnittansicht der Figur 5f erkennbar.

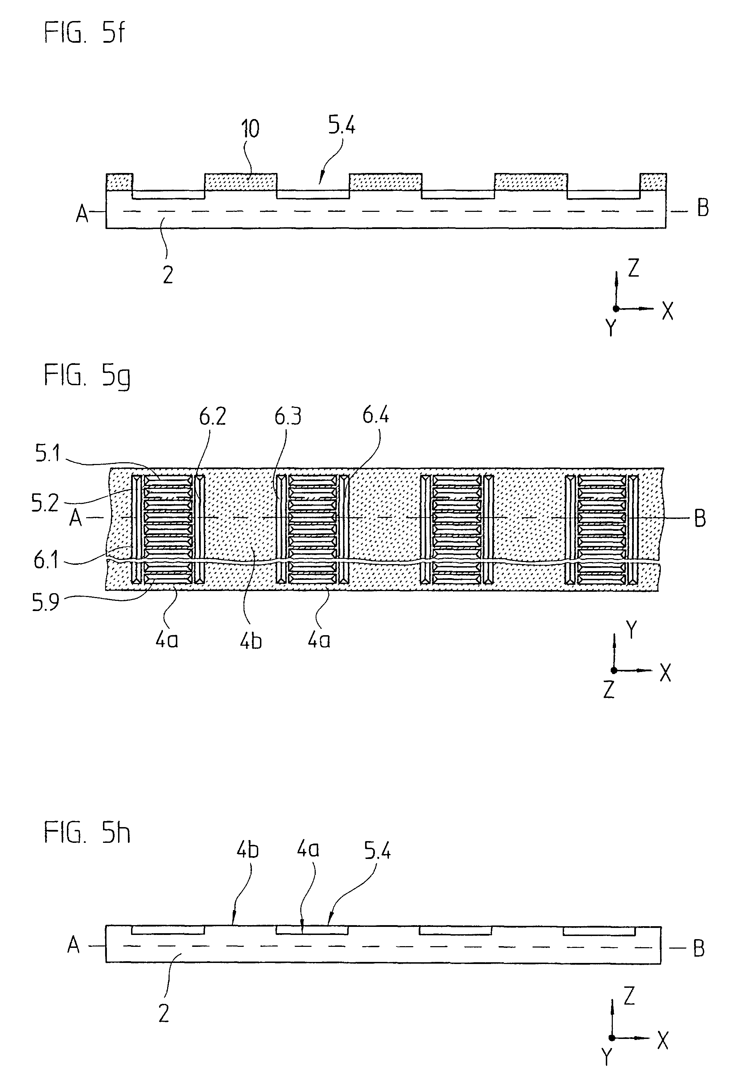

In Figur 5g ist eine Draufsicht auf einen Teil der Maßverkörperung in diesem Prozeßstadium dargestellt.

Abschließend wird lediglich noch die Ätzmaske 10 entfernt, was etwa durch bekannte naßchemische Ätzverfahren erfolgen kann. Ein Schnitt durch die dann resultierende Struktur ist in Figur 5h gezeigt.

Der letzte Verfahrensschritt ist hierbei nicht in jedem Fall erforderlich; insbesondere dann nicht, wenn in den höher reflektierenden Teilbereichen 4b die reflektierende Ätzmaske 10 verbleiben soll. Im Fall einer Chrom-Ätzmaske kann z.B. in den Teilbereichen 4b hoher Reflektivität die Chrom-Ätzmaske verbleiben. Dies ist insbesondere dann sinnvoll, wenn ggf. eine besonders hohe Reflektivität der Teilbereiche 4b gefordert wird. Grundsätzlich reicht jedoch der bereits oben erwähnte Reflexionsgrad der Silizium-Substrat-Oberfläche aus.

Als besonders vorteilhaft am oben beschriebenen Verfahren ist anzuführen, daß dabei praktisch keine Unterätzung der Ätzmaske resultiert und sich damit auch eine mechanisch stabile Teilungsstruktur ergibt. Desweiteren ermöglicht dieses Verfahren die Herstellung besonders feiner Teilungsstrukturen.

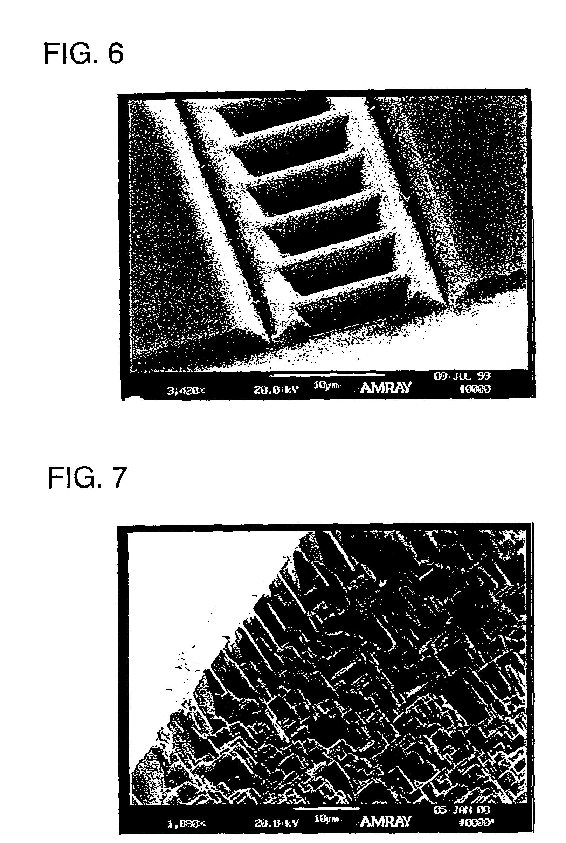

Eine Rasterelektronenmikroskop-Aufnahme einer ersten Ausführungsform der erfindungsgemäßen Maßverkörperung, wie sie vorab beschrieben wurde, ist in Figur 6 gezeigt. Die gering reflektierenden Teilbereiche weisen dabei die oben beschriebene V-Rillen-Struktur auf.

Figur 7 zeigt die Rasterelektronenmikroskop-Aufnahme eines Ausschnittes einer zweiten Variante der erfindungsgemäßen Maßverkörperung. Erkennbar ist in Figur 7 ein Ausschnitt eines gering-refiektierenden Teilbereiches, bei dem die tiefgeätzten schrägen Flächen wie oben angedeutet durch eine Vielzahl von unregelmäßig verteilten pyramidenförmigen Vertiefungen gelbildet werden.

In der vorhergehenden Beschreibung wurden selbstverständlich nur mögliche Ausführungsbeispiele erläutert, d.h. im Rahmen der vorliegenden Erifindung sind auch noch entsprechende Abwandlungen hiervon realisierbar.

## Patentansprüche

1. Reflexions-Maßverkörperung, bestehend aus ersten und zweiten Teilbereichen (4a, 4b) mit unterschiedlichen optischen Reflexionseigenschaften, die sich mindestens in einer ersten Richtung (x) auf einem Silizium-Substrat (2) erstrecken,
**dadurch gekennzeichnet, dass**
die geringer reflektierenden ersten Teilbereiche (4a) mehrere tiefgeätzte spiegelnd reflektierende schräge Flächen (5.1a, 5.1b) umfassen, die derart angeordnet sind, dass für Licht, welches normal zum Silizium-Substrat einfällt, keine Retroreflexion von diesen Teilbereichen (4a) resultiert.

2. Reflexions-Maßverkörperung nach Anspruch 1, **dadurch gekennzeichnet, dass** die schrägen Flächen (5.1a, 5.1b) aus mehreren benachbarten V-Rillen (5.1 - 5.10) bestehen, die in einer zweiten Richtung angeordnet sind, die senkrecht zur ersten Richtung orientiert ist.

3. Reflexions-Maßverkörperung nach Anspruch 2, **dadurch gekennzeichnet, dass** die V-Rillen (5.1 - 5.10) in den ersten Teilbereichen (4.a) periodisch angeordnet sind.

4. Reflexions-Maßverkörperung nach Anspruch 2, **dadurch gekennzeichnet, dass** die schrägen Flächen (5.1a, 5.1b) einer V-Rille (5.1 - 5.10) jeweils in einem Winkel (α) von ca. 72° zueinander orientiert sind.

5. Reflexions-Maßverkörperung nach Anspruch 1, **dadurch gekennzeichnet, dass** als Silizium-Substratmaterial (2) einkristallines (100)-Silizium dient und die erste Richtung (x) der (011)-Richtung des einkristallinen (100)-Siliziums entspricht.

6. Reflexions-Maßverkörperung nach Anspruch 1, **dadurch gekennzeichnet, dass** die Breite (b) der ersten Teilbereiche (4.a) und die Breite (b) der zweiten Teilbereiche (4b) in der ersten Richtung (x) identisch gewählt sind.

7. Reflexions-Maßverkörperung nach Anspruch 2, **dadurch gekennzeichnet, dass** an den Rändern der ersten, nichtreflektierenden Bereiche (4a) jeweils ebenfalls mindestens eine V-Rille (6.1 - 6.4) angeordnet ist, die sich in der zweiten Richtung (y) nahezu über die vollständige Länge (I) der ersten Teilbereiche (4a) erstreckt.

8. Reflexions-Maßverkörperung nach Anspruch 1, **dadurch gekennzeichnet, dass** auf den zweiten, stärker reflektierenden Teilbereichen (4b) eine Beschichtung aus hochreflektierendem Material aufgebracht ist.

9. Reflexions-Maßverkörperung nach Anspruch 1, **dadurch gekennzeichnet, dass** die schrägen Flächen als pyramidenförmige Vertiefungen ausgebildet sind.

10. Reflexions-Maßverkörperung nach Anspruch 1, **dadurch gekennzeichnet, dass** die schrägen Flächen derart angeordnet sind, dass für Lichtstrahlen (L) aus einer bestimmten Einfallsrichtung (IN) nach mehrfacher Reflexion an den schrägen Flächen (5.1a, 5.1b) eine Ausfallsrichtung (OUT) resultiert, die nicht mit der Einfallsrichtung (IN) zusammenfällt.

11. Verfahren zur Herstellung einer Reflexions-Maßverkörperung, die aus ersten und zweiten Teilbereichen (4a, 4b) mit unterschiedlichen optischen Reflexionseigenschaften besteht, die die sich mindestens in einer ersten Richtung (x) auf einem Silizium-Substrat (2) erstrecken,
**dadurch gekennzeichnet, dass**
in den geringer reflektierenden ersten Teilbereichen (4a) mehrere spiegelnd reflektierende schräge Flächen (5.1a, 5.1b) durch Tiefätzen erzeugt werden, die derart angeordnet sind, dass für Licht, welches normal zum Silizium-Substrat einfällt, keine Retroreflexion von diesen Teilbereichen (4a) resultiert.

12. Verfahren nach Anspruch 11, **dadurch gekennzeichnet, dass** senkrecht zur ersten Richtung (x) jeweils mehrere V-Rillen (5.1 - 5.10) in einer zweiten Richtung (y) ausgebildet werden.

13. Verfahren nach Anspruch 12, **dadurch gekennzeichnet, dass** zur Ausbildung der V-Rillen (5.1 - 5.10) in die Oberfläche des Silizium-Substrates (2) gezielt schräge Flächen (5.1a, 5.1b) im Bereich der ersten Teilbereiche (4a) geätzt werden.

14. Verfahren nach Anspruch 13, **dadurch gekennzeichnet, dass** vor dem Ätzen der schrägen Flächen (5.1a, 5.1b) mindestens die zweiten Teilbereiche (4b) auf der Silizium-Oberfläche mit einer Ätzmaske (10) abgedeckt werden.

15. Verfahren nach Anspruch 14, **dadurch gekennzeichnet, dass** als Material der Ätzmaske (10) Chrom verwendet wird.

16. Verfahren nach Anspruch 13, **dadurch gekennzeichnet, dass** als Ätzlösung Kaliumhydroxid in Verbindung mit Isopropanol verwendet wird.

17. Verfahren nach Anspruch 13, **dadurch gekennzeichnet, dass** der Ätzprozeß solange dauert, bis jeweils die V-Rillen vollständig ausgebildet sind.

18. Verfahren nach Anspruch 14, **dadurch gekennzeichnet, dass** nach Beendigung des Ätzprozesses die Ätzmaske wieder entfernt wird.

19. Verfahren nach Anspruch 11, **dadurch gekennzeichnet, dass** in die ersten Teilbereiche mehrere pyramidenförmige Vertiefungen in das Silizium-Substrat geätzt werden.

## Claims

1. Reflection material measure, comprising first and second partial regions (4a, 4b) with different optical reflection properties which extend at least in a first direction (x) on a silicon substrate (2),
**characterised in that**
the less reflective first partial regions (4a) comprise a plurality of deep-etched mirror-like reflective diagonal faces (5.1a, 5.1b), which faces are disposed in such a manner that no retroreflection results from these partial regions (4a) for light which is incident perpendicularly to the silicon substrate.

2. Reflection material measure according to claim 1, **characterised in that** the diagonal faces (5.1a, 5.1b) comprise a plurality of adjacent V-grooves (5.1 - 5.10) which is disposed in a second direction which is orientated perpendicularly to the first direction.

3. Reflection material measure according to claim 2, **characterised in that** the V-grooves (5.1 - 5.10) are periodically disposed in the first partial regions (4a).

4. Reflection material measure according to claim 2, **characterised in that** the diagonal faces (5.1a, 5.1b) of a V-groove (5.1 - 5.10) are orientated respectively at an angle (a) of approximately 72° to each other.

5. Reflection material measure according to claim 1, **characterised in that** monocrystalline (100) silicon serves as silicon substrate material (2) and the first direction (x) corresponds to the (011)-direction of the monocrystalline (100) silicon.

6. Reflection material measure according to claim 1, **characterised in that** the width (b) of the first partial regions (4a) and the width (b) of the second partial regions (4b) in the first direction (x) are selected identically.

7. Reflection material measure according to claim 2, **characterised in that** likewise at least one V-groove (6.1 - 6.4) respectively is disposed at the edges of the first non-reflective regions (4a), said V-groove extending in the second direction (y) nearly across the entire length (1) of the first partial regions (4a).

8. Reflection material measure according to claim 1, **characterised in that** a coating made of highly reflective material is applied to the second more strongly reflective partial regions (4b).

9. Reflection material measure according to claim 1, **characterised in that** the diagonal faces are configured as pyramid-shaped recesses.

10. Reflection material measure according to claim 1, **characterised in that** the diagonal faces are disposed in such a manner that, for light beams (L) from a specific incidence direction (IN), an emergence direction (OUT) results after multiple reflection on the diagonal faces (5.1a, 5.1b), which emergence direction does not coincide with the incidence direction (IN).

11. Method for producing a reflection material measure which comprises first and second partial regions (4a, 4b) with different optical reflection properties which extend at least in a first direction (x) on a silicon substrate (2),
**characterised in that**,
in the less reflective first partial regions (4a), a plurality of mirror-like reflective diagonal faces (5.1a, 5.1 b) is produced by deep etching, which faces are disposed in such a manner that no retroreflection results from these partial regions (4a) for light which is incident perpendicularly to the silicon substrate.

12. Method according to claim 11, **characterised in that** a plurality of V-grooves (5.1 - 5.10) respectively is configured in a second direction (y) perpendicularly to the first direction (x).

13. Method according to claim 12, **characterised in that**, in order to configure the V-grooves (5.1 - 5.10) in the surface of the silicon substrate (2), diagonal faces (5.1a, 5.1b) are etched specifically in the region of the first partial regions (4a).

14. Method according to claim 13, **characterised in that**, before the etching of the diagonal faces (5.1a, 5.1b), at least the second partial regions (4b) on the silicon surface are covered with an etching mask (10).

15. Method according to claim 14, **characterised in that** chrome is used as the material of the etching mask (10).

16. Method according to claim 13, **characterised in that** potassium hydroxide in combination with isopropanol is used as etching solution.

17. Method according to claim 13, **characterised in that** the etching process lasts until the V-grooves respectively are completely configured.

18. Method according to claim 14, **characterised in that**, after completion of the etching process, the etching mask is removed again.

19. Method according to claim 11, **characterised in that**, in the first partial regions, a plurality of pyramid-shaped recesses is etched in the silicon substrate.

## Revendications

1. Mesure matérialisée à réflexion formée de premières et de deuxièmes zones élémentaires (4a, 4b) avec des propriétés de réflexion optique différentes, qui s'étendent au moins dans une première direction (x) sur un substrat de silicium (2), **caractérisée en ce que** les premières zones élémentaires (4a) moins réfléchissantes comprennent plusieurs surfaces (5.1a, 5.1b) inclinées réfléchissantes gravées en creux, qui sont disposées de manière telle, que pour de la lumière incidente normale au substrat de silicium, il n'y ait pas de rétro réflexion par ces zones élémentaires (4a).

2. Mesure matérialisée à à réflexion selon la revendication 1, **caractérisée en ce que** les surfaces (5.1a, 5.1b) inclinées sont formées de plusieurs sillons en V (5.1-5.10) voisins qui sont disposés dans une deuxième direction, perpendiculaire à la première direction.

3. Mesure matérialisée à réflexion selon la revendication 2, **caractérisée en ce que** les sillons en V (5.1-5.10) dans les premières zones élémentaires (4.a) sont disposés de manière périodique.

4. Mesure matérialisée à réflexion selon la revendication 2, **caractérisée en ce que** les surfaces inclinées (5.1a, 5.1b) d'un sillon en V (5.1-5.10) sont orientées suivant un angle (a) d'environ 72° l'une par rapport à l'autre.

5. Mesure matérialisée à réflexion selon la revendication 1, **caractérisée en ce que** le matériau substrat de silicium (2) est du silicium (100) monocristal et que la première direction (x) correspond à la direction (011) du silicium-(100) monocristal.

6. Mesure matérialisée à réflexion selon la revendication 1, **caractérisée en ce que** la largeur (b) des premières zones élémentaires (4.a) et la largeur (b) des deuxièmes zones élémentaires (4.b) dans la première direction (x) sont choisies identiques.

7. Mesure matérialisée à réflexion selon la revendication 2, **caractérisée en ce que** sur les bords des premières zones (4a) non-réfléchissantes est également disposé au moins un sillon en V (6.1-6.4), qui s'étend dans la deuxième direction (y), sur pratiquement toute la longueur (1) des premières zones élémentaires (4a).

8. Mesure matérialisée à réflexion selon la revendication 1, **caractérisée en ce qu'**un revêtement en un matériau fortement réfléchissant est appliqué les deuxièmes zones élémentaires (4.b) plus réfléchissantes.

9. Mesure matérialisée à réflexion selon la revendication 1, **caractérisée en ce que** les surfaces inclinées sont conformées en dépressions pyramidales.

10. Mesure matérialisée à réflexion selon la revendication 1, **caractérisée en ce que** les surfaces inclinées sont disposées de telle sorte, que pour des rayons lumineux (L) avec une direction d'incidence (IN) déterminée, la direction de sortie (OUT) après plusieurs réflexions sur les surfaces inclinées (5.1a, 5.1b) ne coïncide pas avec la direction d'incidence (IN).

11. Procédé de fabrication d'une mesure matérialisée formée de premières et de deuxièmes zones élémentaires (4a, 4b) avec des propriétés de réflexion différentes, qui s'étendent au moins dans une première direction (x) sur un substrat de silicium (2), **caractérisé en ce que** dans les premières zones élémentaires (4a) moins réfléchissantes plusieurs surfaces inclinées (5.1a, 5.1b ) réfléchissantes sont produites par gravure chimique, lesquelles surfaces sont disposées de telle sorte que pour de la lumière incidente normale au substrat de silicium, il n'y ait pas de rétro réflexion par ces surfaces élémentaires (4a).

12. Procédé selon la revendication 11, **caractérisé en ce que** plusieurs sillons en V (5.1-5.10) sont aménagés dans une deuxième direction (y) perpendiculaire à la première direction (x),.

13. Procédé selon la revendication 12, **caractérisé en ce que** pour produire les sillons en V (5.1, 5.10) des surfaces (5.1a, 5.1b) dotées d'une inclinaison adaptée sont gravées par voie chimique dans la surface du substrat de silicium (2), dans la région des premières zones élémentaires (4a).

14. Procédé selon la revendication 13, **caractérisé en ce qu'**avant la gravure par voie chimique des surfaces inclinées (5.1a, 5.1b), on couvre à l'aide d'un masque de gravure (10), au moins les deuxièmes zones élémentaires (4b) sur la surface du substrat de silicium.

15. Procédé selon la revendication 14, **caractérisé en ce qu'**on utilise du chrome comme matériau pour le masque de gravure (10).

16. Procédé selon la revendication 13, **caractérisé en ce qu'**on utilise comme solution de gravure de l'hydroxyde de potassium en combinaison avec de l'isopropanol.

17. Procédé selon la revendication 13, **caractérisé en ce que** le processus de gravure dure jusqu'à ce que les sillons en V soient entièrement formés.

18. Procédé selon la revendication 14, **caractérisé en ce qu'**une fois la gravure terminée on élimine le masque de gravure.

19. Procédé selon la revendication 11, **caractérisé en ce que** dans les premières zones élémentaires, plusieurs dépressions de forme pyramidale sont gravées par voie chimique dans le substrat de silicium.
